# EUROPÄISCHE PATENTSCHRIFT

(11) **EP 0 496 915 B1**
(45) Veröffentlichungstag und Bekanntmachung des Hinweises auf die Patenterteilung: **13.07.1994**
(21) Anmeldenummer: 91101252.4
(22) Anmeldetag: 31.01.1991
(51) Int. Cl.: B01D 21/00, B03B 9/00, C02F 11/00

(54) **Verfahren zum Aufbereiten von Ablagerungen**
Method for treating deposits
Méthode pour le traitement de dépôts

(43) Veröffentlichungstag der Anmeldung: 05.08.1992
(73) Patentinhaber: Kreyenberg, Heiner, Dipl.-Ing. Dr., D-40885 Ratingen (DE)
(72) Erfinder: Kreyenberg, Heiner, Dipl.-Ing. Dr., D-40885 Ratingen (DE)
(74) Vertreter: Stenger, Watzke & Ring Patentanwälte

(56) Entgegenhaltungen:
- EP-A- 0 282 621
- DE-A- 2 420 493
- DE-B- 1 298 462
- DE-B- 1 298 463
- GB-A- 2 088 233

## Beschreibung

Die Erfindung betrifft ein Verfahren zum Aufbereiten von Ablagerungen, insbesondere von Sedimenten und dabei insbesondere von Sedimenten bei der Gewässerausbaggerung, von Altlastenmaterial oder dgl., bei dem das zu behandelnde Material mit seinen anorganischen (Steine, Kies, Sand etc.) und organischen (Holz, Wurzeln etc.) Bestandteilen in aufeinanderfolgenden Stufen klassiert und dabei gegebenenfalls von Schadstoffen gereinigt wird, wobei zunächst in einer ersten Stufe vorzugsweise mittels eines Klassierers aus dem Material die Bestandteile oberhalb einer bestimmten Größe getrennt nach anorganischen und organischen Bestandteilen ausgesondert werden, anschließend in einer zweiten Stufe die in einer anorganischen und organischen Trübe enthaltenen anorganischen Bestandteile entwässert werden und schließlich in einer dritten Stufe vorzugsweise mittels einer Zentrifuge die anorganische und organische Trübe der dann übrig gebliebenen Bestandteile entwässert und dabei der gewonnene Dickschlamm und das Ablaufwasser weiterverarbeitet oder abgeführt werden.

Ein besonderes Anwendungsgebiet der Erfindung ist die Aufbereitung von Sedimenten, die beim Ausbaggern von Gewässern und Böden anfallen, also beispielsweise aus Binnenseen, Flüssen, Wasserstraßen (Kanälen) etc. Ein weiteres Anwendungsgebiet der Erfindung ist die Aufbereitung von Altlastenmaterial. Der Anwendungsbereich der Erfindung ist jedoch nicht auf die Aufbereitung derartiger Materialien beschränkt. Vielmehr ist unter der Aufbereitung von Ablagerungen sämtliches Material zu verstehen, welches dem erfindungsgemäßen Prozeß unterworfen werden kann, um mit ihnen die gleichen Effekte zu erzielen, wie sie beispielsweise bei den bei der Gewässerausbaggerung anfallenden Sedimenten erzielt werden. Insbesondere sind dabei unter den erfindungsgemäßen Ablagerungen Materialien zu verstehen, welche nach der Aufbereitung weiterverarbeitet werden sollen und die aus Feinstgut, Feingut sowie Grobgut zusammengesetzt sind.

Das Verfahren zum Aufbereiten von Ablagerungen in Form von bei der Schlammentnahme aus Gewässern anfallenden Sedimenten der eingangs angegebenen Art ist aus der EP-A- 0 282 621 bekannt. Dabei wird das zu behandelnde Material in aufeinanderfolgenden Stufen voneinander getrennt und insbesondere von Schadstoffen gereinigt, so daß die daraus gewonnenen Fraktionen der Weiterverwertung zugeführt werden können. Zu diesem Zweck wird zunächst in einer ersten Stufe mittels eines Klassierers aus dem Schlamm die Bestandteile oberhalb einer bestimmten Größe getrennt nach anorganischen und organischen Bestandteilen ausgesondert. In einer sich anschließenden zweiten Stufe werden mittels einer Zyklonanlage und mittels eines Schwertrübesortierers sowie einem nachgeordneten Schwingentwässerer die in einer anorganischen und organischen Trübe enthaltenen anorganischen Bestandteile entwässert, um schließlich in einer dritten Stufe die anorganische und organische Trübe der dann übrig gebliebenen Bestandteile mittels einer Zentrifuge zu entwässern, um so daraus Dickschlamm zu gewinnen.

Ein Nachteil bei dieser bekannten Aufbereitungsvorrichtung für Ablagerungen insbesondere in Form von Sedimenten ist die beschränkte Durchsatzleistung, welche durch die zweite Stufe mit der Zyklonanlage, dem Schwertrübesortierer sowie durch den Schwingentwässerer bedingt ist. Darüber hinaus verbraucht diese zweite Stufe sehr viel an Energie und bedarf schließlich einen erhöhten Bedienaufwand, da die Aufstromtechnik mit dem Aufstromsortierer der ständigen Beobachtung bedarf, da ansonsten bei einem zu geringen Aufstromwasser und Druck die Gefahr besteht, daß sich Ablagerungen auf dem Boden ergeben, die zu keiner vernünftigen Durchströmung und damit zu keiner sauberen Reinigung des Sandes mehr führen.

Davon ausgehend liegt der Erfindung die **Aufgabe** zugrunde, ein verbessertes Aufbereitungsverfahren für Ablagerungen zu schaffen, wobei insbesondere in der zweiten Stufe die Durchsatzleistung bei einer Einsparung an Energie erhöht werden soll.

Als technische **Lösung** wird mit der Erfindung vorgeschlagen, daß für die zweite Stufe ein Entwässerungsschöpfrad verwendet wird, wobei das Entwässerungsschöpfrad in der Wanne mit einer Aufstromsortiereinrichtung für das zu entwässernde Gut ausgestattet ist.

Solche Entwässerungsschöpfräder an sich sind beispielsweise aus der DE-B-1298 462 bekannt. Darin wird ihre Verwendung zur Aufbereitung von Kies-Sand-Wasser-Gemischen beschrieben.

Ein nach dieser technischen Lehre ausgebildetes Aufbereitungsverfahren für Ablagerungen und dabei insbesondere für Sedimente bei der Gewässerausbaggerung hat zunächst den Vorteil, daß durch die Verwendung eines Entwässerungsschöpfrades in der zweiten Stufe eine sehr hohe Durchsatzleistung in der Gesamtanlage erzielt werden kann. Durch die Verwendung eines Entwässerungsschöpfrades statt einer Multizyklonanlage mit einem nachgeordneten Aufstromklassierer wird darüber hinaus eine wesentliche Einsparung an Energie erzielt. Schließlich ist ein geringer verfahrenstechnischer Aufwand in Form eines geringeren Bedienaufwandes erforderlich, da man ein Entwässerungsschöpfrad einfach laufen lassen kann, ohne daß dieses im Gegensatz zu einem Aufstromsortierer einer besonderen Bewachung bedarf. Zusammenfassend zeichnet sich somit das erfindungsgemäße Aufbereitungsverfahren durch seine geringen Investitions- und Betriebskosten aus und stellt eine preiswerte Möglichkeit zum Aufbereiten von Ablagerungen insbesondere von Sedimenten bei der Gewässerausbaggerung dar. Ein Entwässerungsschöpfrad, wie es für die erfindungsgemäße Anlage verwendet wird, arbeitet ähnlich wie ein herkömmliches Mühlrad und ist mit Taschen mit jeweils einem darin angeordneten Siebboden ausgestattet. Die Feinpartikel in Form einer anorganischen und organischen Trübe laufen dabei durch, während der zurückgehaltene Kies und Sand nach einer statischen Entwässerung ausgetragen wird. Die übrig gebliebene Trübe wird mittels einer entsprechenden Pumpe angesaugt und wird der nachfolgenden Stufe bzw. den nachfolgenden Stufen zugeführt.

In einer Weiterbildung des erfindungsgemäßen Aufbereitungsverfahrens wird vorgeschlagen, daß dem Entwässerungsschöpfrad ein insbesondere zweibahniger Schwingklassierer der ersten Stufe vorgeordnet ist. Eine Bahn dieses Schwingklassierers klassiert dabei den mineralischen Kies und Sand, während eine zweite Bahn für die organischen Teile, Kunststoffteile etc. zuständig ist. Dieser vorgeschaltete Schwingklassierer ist insbesondere dann sinnvoll, wenn ein Entwässerungscontainer vorgesehen ist.

In einer weiteren Weiterbildung wird vorgeschlagen, daß dem Schwingklassierer außer dem Entwässerungsschöpfrad der bereits erwähnte Entwässerungscontainer insbesondere für die groben organischen Bestandteile nachgeordnet ist. Ein derartiger Entwässerungscontainer ist ein Behälter für die rohen Stoffe, die in dem Behälter zurückgehalten werden, wobei durch seitlich angeordnete Spalte, Schlitze oder Siebe die Trübe abgezogen wird. Der Entwässerungscontainer kann nach dem Befüllvorgang anschließend weggefahren und die darin enthaltenen Stoffe der Entsorgung oder der Weiterverarbeitung zugeführt werden.

In einer weiteren bevorzugten Weiterbildung wird vorgeschlagen, daß dem Entwässerungsschöpfrad für die anorganische und organische Trübe ein Eindicker, insbesondere ein Kompressionseindicker oder Lamellenklärer der dritten Stufe nachgeordnet ist. Dadurch wird auf technisch einfache Weise die aus dem Entwässerungsschöpfrad abgezogene Trübe der Weiterverarbeitung zugeführt.

In einer bevorzugten Weiterbildung des Entwässerungsschöpfrades ist den Taschen dieses Entwässerungsschöpfrades jeweils eine Vakuumeinrichtung zur Verbesserung der Wasserabscheidung zugeordnet. Durch eine derartige Vakuumeinrichtung wird die Effektivität der Entwässerung verbessert. Bei dieser Vakuumeinrichtung kann es sich um ein jeder Tasche zugeordnetes Rohr handeln, welches sich beim Eintauchen in das Wasser füllt, so daß darin eine Wassersäule entsteht, wobei dann beim Hochsteigen des Wasserrohres aus dem Wasser dieses sich entleert und dabei eine Sogwirkung entfaltet, welche das in der Tasche befindliche Wasser durch das Bodensieb zieht.

In einer weiteren bevorzugten Weiterbildung des Entwässerungsschöpfrades ist dieses in der Wanne mit einer Aufstromsortiereinrichtung für das zu entwässernde Gut ausgestattet. Eine derartige Aufstromsortiereinrichtung hat den Vorteil, daß durch den in der Wanne erzeugten Aufstrom die Trübe oben ausgeschwemmt und die feinorganischen und feinmineralischen Partikel wie bei einem Aufstromsortierer ausgewaschen werden, so daß durch diese zusätzliche Aufstromsortiereinrichtung die Effektivität des Entwässerungsschöpfrades in der zweiten Stufe verbessert wird.

In einer konstruktiven Ausbildung der Aufstromsortiereinrichtung besteht diese aus vorzugsweise zwei, beidseits des Schöpfrades angeordneten sowie in Längsrichtung im wesentlichen horizontal sich erstreckenden Düsenrohren mit Aufstromdüsen. Durch diese Aufstromdüsen hindurch wird Wasser gepumpt, die den Aufstrom innerhalb der Wanne des Entwässerungsschöpfrades bilden. Dies stellt eine technisch einfache Möglichkeit zur Realisierung einer derartigen Aufstromsortiereinrichtung dar.

Ein Ausführungsbeispiel das erfindungsgemäßen Aufbereitungsverfahrens für Ablagerungen insbesondere für bei der Gewässerausbaggerung anfallende Sedimente wird nachfolgend anhand der Zeichnungen beschrieben. In diesen zeigt:
- Fig. 1: eine schematische Darstellung der Aufbereitungsvorrichtung;

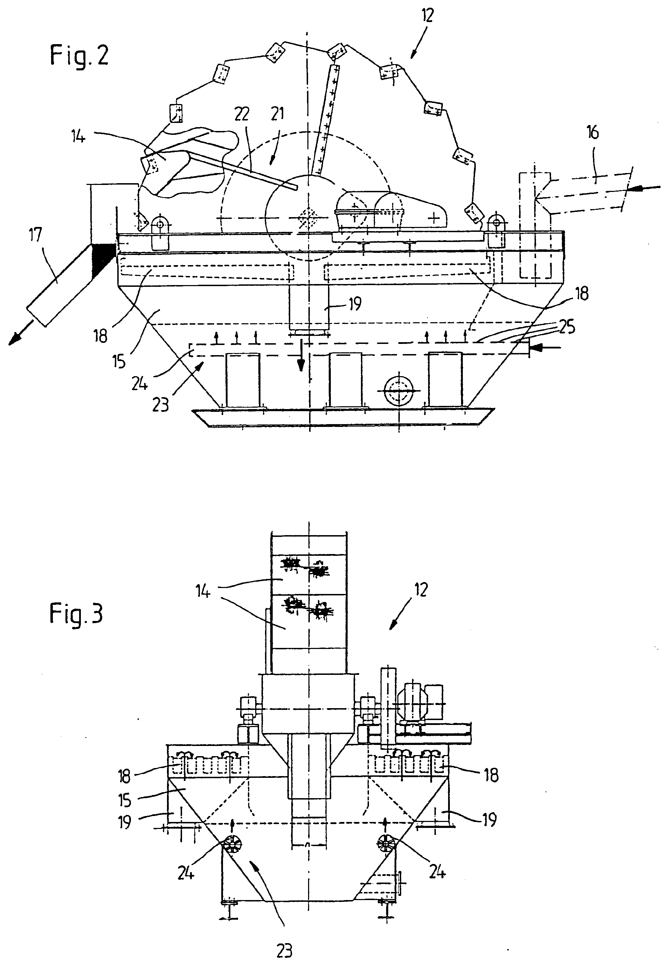

- Fig. 2: eine Seitenansicht des Entwässerungsschöpfrades der Anlage;
- Fig. 3: eine Stirnansicht des Entwässerungsschöpfrades in Fig. 2.

Die Anlage besteht zunächst aus einer Entnahmevorrichtung 1 für den Schlamm beispielsweise in Form eines Schneidkopfsaugbaggers. Diese Entnahmevorrichtung 1 ist mit einem Steinfangkorb 2 ausgestattet, der beispielsweise eine Maschenweite von 100 mm hat und somit größere Bestandteile als 100 mm auffängt.

Die Sediment-Suspension wird unter Zwischenschaltung eines Mengenreglers 3 für die Anlagenbeschickung einer ersten Trennstufe bestehend aus Siebzyklon 4, einer Waschtrommel 5 sowie einem Schwingklassierer 6 zugeführt. In dieser ersten Trennstufe erfolgt eine Trennung der anorganischen und organischen Grobbestandteile oberhalb einer Größe von beispielsweise 6 mm von den Feinbestandteilen unterhalb von 6 mm. In dem Siebzyklon 4 erfolgt eine Wasservorabscheidung und Vorabsiebung der Grobbestandteile oberhalb 6 mm, so daß in einer Leitung 7 das vorabgeschiedene Wasser mit Feinbestandteilen unterhalb 6 mm (Feinschlamm) abgeführt und dem Schwingklassierer 6 zugeführt wird. Die im Siebzyklon 4 vorentwässerte Feststoffsuspension mit den Grobbestandteilen wird über eine Leitung 8 der Waschtrommel 5 zugeführt, die mit Schikanen versehen ist. Diese bewirken eine Abscheidung der groben organischen Bestandteile (Holz, Wurzeln etc.) von den groben anorganischen Bestandteilen (Steine, Kies, Sand etc.), wobei der Austrag aus der Waschtrommel 5 separat über die Leitung 9 (organische Bestandteile) und die Leitung 10 (anorganische Bestandteile) erfolgt. Eine weitere, jedoch nicht eingezeichnete Leitung führt von der Waschtrommel 5 zu dem Schwingklassierer 6, und zwar führt diese Leitung die Feinbestandteile unter 6 mm aus der Waschtrommel 5 ab und führt sie dem Schwingklassierer 6 zu.

Der Schwingklassierer 6 besteht aus zwei Bahnen, und zwar eine erste Bahn für den mineralischen Kies und eine zweite Bahn für die organischen Teile, Kunststoffteile und alles, was sonst noch außer dem mineralischen Kies anfällt. Auf den Bahnen des Schwingklassierers 6 werden die Grobbestandteile mehrfach hin- und hergeleitet und von feinen organischen und mineralischen Partikeln gereinigt. Dies gilt insbesondere für die organischen Grobbestandteile, um bei diesen Feinstteile auszuwaschen, die eventuell mit Schwermetallen kontaminiert sind.

Die so gereinigten organischen Bestandteile werden von ihrer entsprechenden Bahn des Schwingklassierers 6 einem Entwässerungscontainer 11 zugeführt. Dieser Entwässerungscontainer 11 ist mit seitlich angeordneten Spalten, Sieben oder Schlitzen versehen, durch die hindurch die anorganische und organische Trübe abgezogen werden kann. Es bleiben die organischen Bestandteile übrig, wobei das darin enthaltene Holz und die Wurzeln beispielweise der Verbrennung zur Energiegewinnung oder der Kompostierung zugeführt werden können.

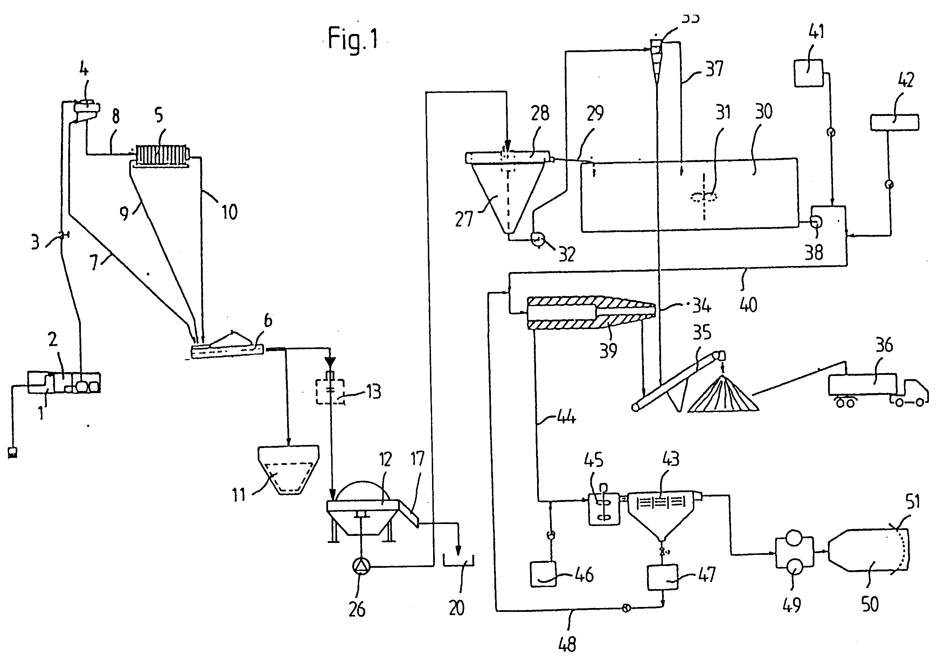

Der zweiten Bahn des Schwingklassierers 6 mit dem mineralischen Kies ist ein Entwässerungsschöpfrad 12 nachgeordnet, wobei in die Leitung zwischen dem Schwingklassierer 6 und diesem Entwässerungsschöpfrad 12 ein Atrition 13 zwischengeschaltet sein kann. Das Entwässerungsschöpfrad 12 arbeitet ähnlich wie ein normales Mühlrad und ist mit Taschen 14 mit jeweils einem Siebboden ausgestattet, welche aus einer Wanne 15 die über einen Zulauf 16 aufgegebenen anorganischen Bestandteile aufnehmen, diese bei der entsprechenden Aufwärtsbewegung der Taschen 14 einer statischen Entwässerung unterziehen und das entwässerte Gut einem Austrag 17 aufgeben. Die übrig gebliebene anorganische und organische Trübe ergießt sich über eine Überlaufrinne 18 in einen Sammler 19, von wo aus die Weiterführung dieser Trübe zur weiteren Behandlung erfolgt. Die über den Austrag 17 ausgetragenen Feststoffe werden einem Kieslager 20 zugeführt, wie dies in Fig. 1 angedeutet ist.

Den Taschen 14 des Entwässerungsschöpfrades 12 ist jeweils eine Vakuumeinrichtung 21 zugeordnet. Diese besteht aus einem Rohr 22, welche vom Siebboden der jeweiligen Tasche 14 ausgeht und sich in den Bereich der Drehachse des Entwässerungsschöpfrades 12 hin erstreckt. Beim Untertauchen der jeweiligen Tasche 14 in die Wanne 15 füllt sich das Rohr 22 mit Wasser und baut daher darin eine Wassersäule auf. Sobald die Tasche 14 nach deren Befüllung wieder aus dem Wasser auftaucht, ist die Neigung des Rohres 22 derart, daß es sich zum unteren Ende im Bereich der Drehachse des Entwässerungsschöpfrades 12 hin entleert und dadurch eine Sogwirkung erzeugt, welche das in der Tasche 14 befindliche Wasser zur besseren Entwässerung des darin befindlichen Festmaterials absaugt.

Weiterhin weist das Entwässerungsschöpfrad 12 in eigenständiger erfindungsgemäßer Weise eine Aufstromsortiereinrichtung 23 auf. Diese besteht aus zwei beidseits des Schöpfrades 12 angeordneten Düsenrohren 24, welche von außerhalb ins Innere der Wanne 15 geführt sind und Aufstromdüsen 25 aufweisen, durch die hindurch zugeführtes Wasser nach oben hin austritt, so daß dadurch ein Aufstrom erzeugt wird. Dieser schwemmt die Trübe oben aus, so daß die feinorganischen und feinmineralischen Partikel wie bei einem Aufstromsortierer ausgewaschen werden, so daß sie über die Überlaufrinne 18 ausgetragen werden.

Die anorganische und organische Trübe aus den Sammlern 19 wird mittels einer Förderpumpe 26 einem Eindicker 27 zugeführt, der in dem dargestellten Ausführungsbeispiel ein Kompressionseindicker ist. Nach Einlauf der mineralischen und organischen Trübe breitet sich diese im Eindicker 27 aus. In einem Überlauf 28 des Eindickers 27 sammeln sich die leichten organischen Bestandteile, die über eine Leitung 29 einem Vorlagebecken 30 mit einem Homogenisierer 31 zugeführt werden. Die nicht durch den Überlauf 28 abgeführten Bestandteile, d.h. die Sande und Schluffe, setzen sich im Eindicker 27 ab und werden aus der unteren Kompressionsspitze mittels einer Pumpe 32 abgezogen und einem Hydrozyklon 33 zugeführt. In diesem Hydrozyklon 33 erfolgt eine Absonderung der Feststoffpartikel aus der aus dem Eindicker 27 stammenden Suspension zur Gewinnung von mechanisch vorentwässerten Sanden und Schluffen mit einer Partikelgröße größer als 0,03 mm. Die Sande und Schluffe werden über eine Leitung 34 einem Transportband 35 zugeführt und einem Lastkraftwagen 36 aufgegeben und der Deponierung, Kompostierung, Verbrennung oder dgl. zugeführt. Die Trübe mit Bestandteilen kleiner als 0,03 mm aus dem Hydrozyklon 33 wird über eine Leitung 37 dem Vorlagebecken 30 zugeführt.

In dem Vorlagebecken 30 befinden sich somit ausschließlich Teilchen, die kleiner als 0,063 mm sind. Von dort aus erfolgt der Weitertransport der Trübe mittels einer Förderpumpe 38 zu einer Entwässerungsmaschine in Form einer Zentrifuge 39, die die dritte Trennstufe nach dem Entwässerungsschöpfrad 12 als zweite Trennstufe bildet.

In die Leitung 40 zwischen dem Vorlagebecken 30 und der Zentrifuge 39 ist eine Fällungsstation 41 geschaltet, die die in dem Wasser gelösten Phosphate durch Zugabe von Fe(II)-Sulfat oder Fe(III)-Chloridsulfat ausfällen und in sedimentationsfähige Feststoffe überführen soll.

Weiterhin ist in die Leitung 40 zwischen dem Vorlagebecken 30 und der Zentrifuge 39 eine Neutralisationsstation 42 geschaltet, die durch Zugabe beispielsweise von Kalkmilch das Wasser entsäuern und damit neutralisieren und zugleich eine Sedimentationshilfe geben soll. Auch hier erfolgt eine Ausfällung zu einem sedimentationsfähigen Feststoff.

In der Zentrifuge 39 erfolgt eine Entwässerung der mineralischen und organischen Trübe sowie der Fällungsstoffe aus den Stationen 33 und 34. Der gewonnene Dickschlamm wird beispielsweise über das Transportband 35 dem Lastwagen 36 aufgegeben und entsprechend dem Schlamm und dem Schluff aus dem Hydrozyklon 33 der Deponierung, Kompostierung, Verbrennung oder dgl. zugeführt.

Das Ablaufwasser (Zentrat) aus der Zentrifuge 39 wird schließlich einem Lamellenklärer 43 über die Leitung 44 zugeführt, dem ein Flockulator 45 vorgeschaltet ist. In die Leitung 44 ist darüber hinaus eine Gegenflockungsstation 46 geschaltet. Das im Lamellenklärer 43 anfallende Schlammkonzentrat 47 wird über eine Leitung 48 der Leitung 40 zur Zentrifuge 39 rückgeführt, so daß das Schlammkonzentrat erneut die dritte Stufe durchlaufen und als Zentrifugat mittels der Zentrifuge abgeschieden werden kann.

Das Ablaufwasser aus dem Lamellenklärer 43 wird nach Passieren eines Filters 49 in einen Vorflutergraben 50 eingeleitet, der eine Ölsperre 51 haben kann. Von dort aus erfolgt die Rückführung des Ablaufwassers zurück in das Gewässer. Der Filter 49 soll das Ablaufwasser von Schwefelpartikeln und Schwimmstoffen befreien, wobei Sandfilter und Festkörperfilter Verwendung finden können. Dadurch wird der Chemische Sauerstoffbedarf (CSB) erheblich verringert.

Die beschriebene Anlage zur Durchführung des erfindungsgemäßen Verfahrens kann stationär aufgebaut sein. Sie kann aber auch mobil sein, d.h. sie kann zu ihrem jeweiligen Einsatzort transportiert werden. Die Anlage kann dabei eine einzige kompakte Vorrichtung sein, in der alle Elemente enthalten sind.

### Bezugszeichenliste

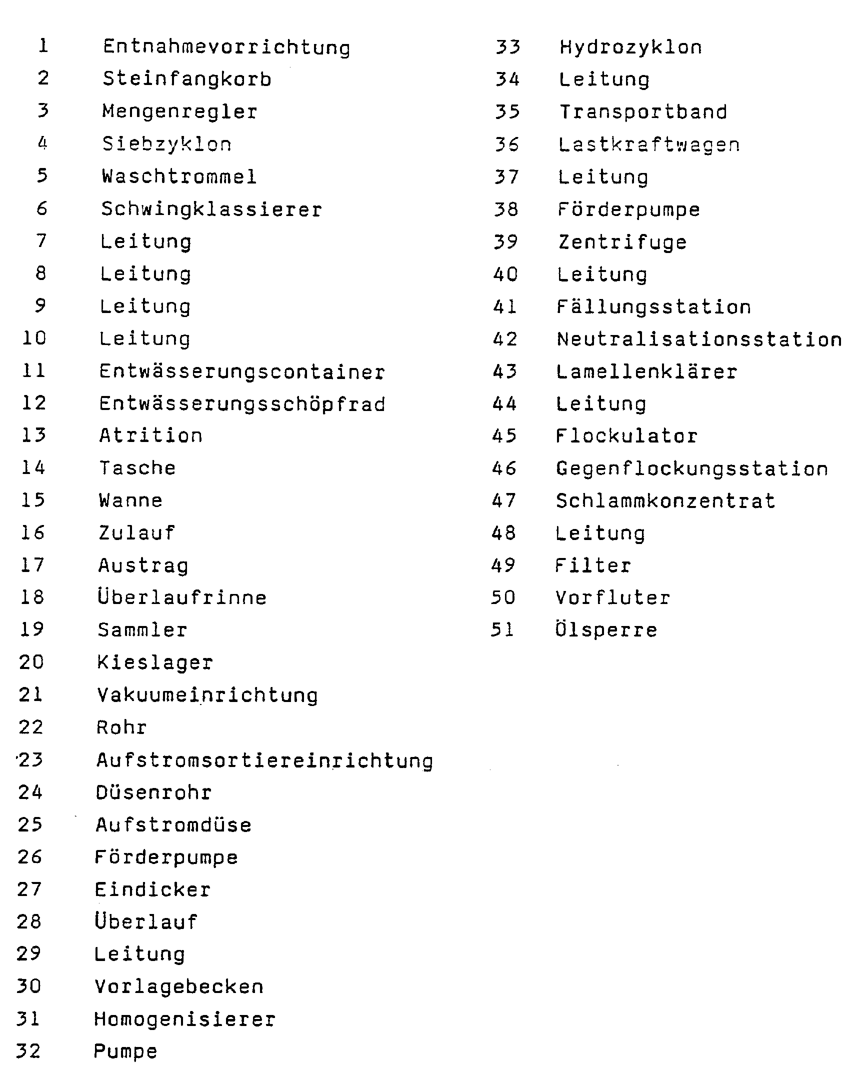

## Patentansprüche

1. Verfahren zum Aufbereiten von Ablagerungen, bei dem das zu behandelnde Material mit seinen anorganischen und organischen Bestandteilen in aufeinanderfolgenden Stufen klassiert und dabei bei Bedarf von Schadstoffen gereinigt wird, wobei zunächst in einer ersten Stufe aus dem Material die Bestandteile oberhalb einer bestimmten Größe getrennt nach anorganischen und organischen Bestandteilen ausgesondert werden,
anschließend in einer zweiten Stufe die in einer anorganischen und organischen Trübe enthaltenen anorganischen Bestandteile entwässert werden und
schließlich in einer dritten Stufe die anorganische und organische Trübe der dann übrig gebliebenen Bestandteile entwässert und dabei der gewonnene Dickschlamm und das Ablaufwasser weiterverarbeitet oder abgeführt werden,
**dadurch gekennzeichnet,**
daß für die zweite Stufe ein Entwässerungsschöpfrad (12) verwendet wird, wobei das Entwässerungsschöpfrad (12) in der Wanne (14) mit einer Aufstromsortiereinrichtung (23) für das zu entwässernde Gut ausgestattet ist.

2. Verfahren nach Anspruch 1, dadurch gekennzeichnet, daß dem Entwässerungsschöpfrad (12) ein Klassierer (6) der ersten Stufe vorgeordnet wird.

3. Verfahren nach Anspruch 2, dadurch gekennzeichnet, daß ein zweibahniger Klassierer (6) verwendet wird.

4. Verfahren nach Anspruch 2 oder 3, dadurch gekennzeichnet, daß dem Klassierer (6) außer dem Entwässerungsschöpfrad (12) ein Entwässerungscontainer (11) nachgeordnet wird.

5. Verfahren nach Anspruch 4, dadurch gekennzeichnet**,** daß der Entwässerungscontainer (11) für die groben organischen Bestandteile verwendet wird.

6. Verfahren nach einem der Ansprüche 1 bis 4, dadurch gekennzeichnet, daß dem Entwässerungsschöpfrad (12) für die anorganische und organische Trübe ein Eindicker (27) der dritten Stufe nachgeordnet wird.

7. Verfahren nach Anspruch 6, dadurch gekennzeichnet, daß als Eindicker (27) ein Kompressionseindicker verwendet wird.

8. Verfahren nach einem der Ansprüche 1 bis 7, dadurch gekennzeichnet, daß den Taschen (14) des Entwässerungsschöpfrades (12) jeweils eine Vakuumeinrichtung (21) zur Verbesserung der Wasserabscheidung zugeordnet wird.

9. Verfahren nach einem der Ansprüche 1 bis 8, dadurch gekennzeichnet, daß die Aufstromsortiereinrichtung (23) aus beidseits des Schöpfrades angeordneten sowie in Längsrichtung im wesentlichen horizontal sich erstreckenden Düsenrohren (24) mit Aufstromdüsen (25) besteht.

10. Verfahren nach Anspruch 9, dadurch gekennzeichnet, daß zwei Düsenrohre (24) verwendet werden.

11. Verfahren nach einem der Ansprüche 1 bis 10, dadurch gekennzeichnet, daß in der ersten Stufe ein Klassierer (6) verwendet wird.

12. Verfahren nach einem der Ansprüche 1 bis 11, dadurch gekennzeichnet, daß in der dritten Stufe eine Zentrifuge (34) verwendet wird.

## Claims

1. Process for the preparation of deposits, in which the material to be handled with its organic and inorganic components is graded in stages one after the other, and when required cleaned of harmful substances, whereby first of all in a first stage the components above a certain size are separated and sorted according to inorganic and organic components,
in a second stage the inorganic component contained in the inorganic and organic mixture is drained out, and
finally in a third stage the remaining components of the inorganic and organic mixture are drained and the resulting thick mud and waste water are lead away or processed further,
characterised in that
for the second stage a drainage wheel (12) is used, whereby the drainage wheel (12) is provided with an flow sorting device (23) in the wall (15) in order to ensure good drainage.

2. Process according to claim, characterised in that, a grader (6) is arranged before the draining wheel (12) of the first stage.

3. Process according to claim , characterised in that, a two lane grader (6) is used.

4. Process according to claim 2 or 3, characterised in that, a drainage container (11) is arranged after the grader (6) and outside the draining wheel (12).

5. Process according to claim 4, characterised in that, the drainage container (11) is used for the course organic components.

6. Process according to any one of claims 1 to 5, characterised in that a thickener (27) for the inorganic and organic mixture of the third stage is arranged after the draining wheel (12).

7. Process according to claim 6, characterised in that a compression thickener is used as the thickener (27).

8. Process according to any one of claims 1 to 7, characterised in that, the a vacuum device (21) is arranged with each of the bags (14) of the draining wheel (12) to improve the water separation.

9. Process according to any one of claims 1 to 8, characterised in that the flow sorting device (23) comprises jet pipes (24) with out flow jets (25) arranged on each side of the drainage wheel (12) as well as extending longitudinally and essentially horizontally.

10. Process according to claim , characterised in that two jet pipes (24) are used.

11. Process according to any one of claims 1 to 10, characterised in that a grader (6) is used in the first stage.

12. Process according to any one of claims 1 to 11, characterised in that in the third stage a centrifuge (34) is used.

## Revendications

1. Procédé pour le traitement de dépôts, dans lequel la matière à traiter est classée avec ses constituants organiques et inorganiques par étapes successives avec élimination des substances nuisibles, si cela est nécessaire, dans lequel, au cours d'une première étape, les constituants au-dessus d'une dimension déterminée sont séparés du matériau en isolant les constituants organiques et inorganiquess tandis que, dans une deuxième étape, les constituants inorganiques contenus dans une suspension inorganique et organique sont déshydratés et qu'enfin, au cours d'une troisième étape, la suspension inorganique et organique des autres constituants restants est déshydratée et que les boues épaissies ainsi obtenues et les eaux résiduaires sont traitées davantage ou évacuées, caractérisé en ce que l'on utilise pour la deuxième étape une roue à augets de déshydratation (12), la roue à augets de déshydratation (12) étant équipée dans la cuve (15) d'un dispositif de triage du courant sortant (23) pour le produit à déshydrater.

2. Procédé selon la revendication 1, caractérisé en ce que la roue à augets de déshydratation (12) est précédée par un classificateur (6) de la première étape.

3. Procédé selon la revendication 2, caractérisé en ce que l'on utilise un classificateur à deux voies (6)

4. Procédé selon la revendication 2 ou 3, caractérisé en ce que le classificateur (6) est suivi non seulement par la roue à augets de déshydratation (12) mais également par un récipient de déshydratation (11).

5. Procédé selon la revendication 4, caractérisé en ce le récipient de déshydratation (11) est utilisé pour les constituants organiques grossiers.

6. Procédé selon l'une des revendications 1 à 5,caractérisé en ce que la roue à augets de déshydratation (12) pour la suspension inorganique et organique est suivie par un épaississeur (27) de la troisième étape.

7. Procédé selon la revendication 6, caractérisé en ce que l'on utilise comme épaississeur (27) un épaississeur à compression.

8. Procédé selon la revendication 1 à 7, caractérisé en ce qu'il existe, pour chacune des poches (14) de la roue à augets de déshydratation (12) , un dispositif à vide (21) pour améliorer l'élimination de l'eau.

9. Procédé selon l'une des revendications 1 à 8, caractérisé en ce que le dispositif de triage du courant sortant (23) est disposé de part et d'autre de la roue à augets et est constitué de tubes à tuyères (24) disposés essentiellement horizontalement en direction longitudinale et comportant des tuyères de sortie (25).

10. Procédé selon la revendication 9, caractérisé en ce que l'on utilise deux tubes à tuyères (24).

11. Procédé selon l'une des revendications 1 à 10, caractérisé en ce que l'on utilise dans la première étape un classificateur (6).

12. Procédé selon l'une des revendications 1 à 11, caractérisé en ce que l'on utilise dans la troisème étape une centrifugeuse (34).
